# EUROPEAN PATENT APPLICATION

(11) **EP 4 080 599 A1**
(43) Date of publication of application: **26.10.2022**
(21) Application number: 20915754.4
(22) Date of filing: 20.01.2020

(54) **ELECTRODE ASSEMBLY AND BATTERY**

(71) Applicant: Ningde Amperex Technology Ltd., Ningde, Fujian 350900 (CN)
(72) Inventor: HAO, Fei, Ningde, Fujian 350900 (CN); TIAN, Jiao, Ningde, Fujian 350900 (CN); XU, Yujiang, Ningde, Fujian 350900 (CN)
(74) Representative: Klunker IP Patentanwälte PartG mbB
(86) International application number: PCT/CN2020/073338
(87) International publication number: WO 2021/146873

(57) **Abstract**

This application provides an electrode assembly, including a first electrode plate, a second electrode plate, and a separator. The electrode assembly is formed by winding the first electrode plate, the separator, and the second electrode plate. The electrode assembly further includes a first tab, a second tab, and a third tab. The first tab is disposed on the first electrode plate. The third tab and the second tab are disposed on the second electrode plate. In a thickness direction of the electrode assembly, projections of the first tab, the second tab, and the third tab do not overlap. The electrode assembly is provided with a multi-tab structure, and uses a plurality of parallel-connected tabs to shunt a current to achieve purposes of enhancing a current-carrying capacity of a battery and reducing a temperature rise. This application further provides a battery containing the electrode assembly.

## Description

### TECHNICAL FIELD

This application relates to the field of batteries, and in particular, to an electrode assembly and a battery that contains the electrode assembly.

### BACKGROUND

The application of 5G is accompanied with higher requirements imposed by consumers on battery performance of a portable electronic product such as a smart phone and a tablet computer. Existing batteries have the problem of high temperature rise in both the battery and the integrated electronic product, and the performance of the battery and the electronic product may deteriorate if the temperature rise is too high. The existing battery adopts a two-tab structure, which does not improve an overall current-carrying capacity of the battery, and therefore, the temperature rise of the battery and the integrated electronic product is still relatively high.

### SUMMARY

In view of the foregoing situation, it is necessary to provide an electrode assembly capable of increasing a current-carrying capacity of a battery and reducing a temperature rise, and to provide a battery containing the electrode assembly.

Embodiments of this application provide an electrode assembly, including a first electrode plate, a second electrode plate, and a separator. A polarity of the second electrode plate is opposite to a polarity of the first electrode plate, and the separator is disposed between the first electrode plate and the second electrode plate. The electrode assembly is formed by winding the first electrode plate, the separator, and the second electrode plate. The electrode assembly further includes a first tab, a second tab, and a third tab. The first tab is disposed on the first electrode plate. The second tab and the third tab are disposed on the second electrode plate. In a thickness direction of the electrode assembly, projections of the first tab, the second tab, and the third tab do not overlap. The three tabs may be configured as two positive tabs and one negative tab, or two negative tabs and one positive tab. The plurality of tabs are connected in parallel to shunt a current to reduce a temperature rise of the electrode assembly.

In an optional embodiment, a projection of the first tab on the projection plane is located between a projection of the second tab and a projection of the third tab, thereby avoiding interference between the plurality of tabs in a process of bending the tabs.

In an optional embodiment, the first electrode plate includes a first coating portion and a first empty foil portion. The second electrode plate includes a second coating portion and a second empty foil portion. The first coating portion is formed by coating a surface of a first current collector with a first active layer. The second coating portion is formed by coating a surface of a second current collector with a second active layer.

Further, a first groove is provided on the active layer on the first coating portion. The first tab is disposed in the first groove to facilitate electrical connection between the first tab and the first electrode plate.

Further, in a length direction of the first electrode plate, a distance between the first groove and an end of the first electrode plate is 1/2-1/3 of a total length of the first electrode plate.

In an optional embodiment, the first tab is disposed on the first empty foil portion.

In an optional embodiment, a second groove is provided on the second coating portion. The second tab is disposed in the second groove. At least two lateral edges of the second groove contact the active layer on the second coating portion.

Further, the third tab is disposed on the second empty foil portion.

In an optional embodiment, a third groove is provided on the second coating portion, and the third tab is disposed in the third groove.

In an optional embodiment, the second empty foil portion includes a first empty foil region and a second empty foil region. The first empty foil region is connected to a first end of the second coating portion. The second empty foil region is connected to a second end of the second coating portion. The second tab and the third tab are disposed in the first empty foil region and the second empty foil region respectively.

In an optional embodiment, in the thickness direction of the electrode assembly, the first tab and the third tab are interspaced with at least one layer of first electrode plate or one layer of second electrode plate. A larger spacing between the tabs increases manufacturability of the electrode assembly.

In an optional embodiment, the first tab includes a connecting portion and a protruding portion. The connecting portion connects the first electrode plate, and the protruding portion extends out of the electrode assembly.

Further, the electrode assembly further includes a first insulator. The first insulator overlays the connecting portion, thereby preventing burrs on the connecting portion from damaging the electrode plate during winding.

Further, the electrode assembly further includes a second insulator. A winding initiation end of the second electrode plate includes a cut portion, and the second insulator overlays the cut portion.

In an optional embodiment, the first tab extends out of a first end of the electrode assembly, and the second tab and the third tab extend out of a second end of the electrode assembly.

In an optional embodiment, the second tab and the third tab are integrally formed. The second tab extends out of a first end of the electrode assembly, and the third tab extends out of a second end of the electrode assembly.

In an optional embodiment, the electrode assembly further includes a fourth tab. The fourth tab is disposed on the first electrode plate or the second electrode plate, and, in the thickness direction of the electrode assembly, a projection of the fourth tab on the projection plane does not overlap the projections of the first tab, the second tab, and the third tab.

In an optional embodiment, at least two electrical connection portions are disposed at an end at which the first tab extends from the electrode assembly. The at least two electrical connection portions are interspaced and configured to connect an external circuit.

In an optional embodiment, a surface of the first tab or a surface of the third tab is plated with a metal material capable of being soldered and brazed, so as to enhance performance of the tabs including a current-carrying capacity. The metal material capable of being soldered and brazed is nickel.

In an optional embodiment, a material of the first tab or the third tab may be selected from copper, nickel, or nickel-plated copper.

An embodiment of this application further provides a battery. The battery includes a housing and an electrode assembly. The electrode assembly is any of the electrode assemblies described above, and the housing accommodates the electrode assembly.

Further, the battery includes a plurality of electrode terminals disposed on an outer surface of the housing, and each electrode terminal is electrically connected to the first tab, the second tab, and the third tab separately.

In the electrode assembly, the first tab, the second tab, and the third tab are disposed. Therefore, the electrode assembly exhibits a multi-tab structure, and shunts the current by using a plurality of parallel-connected tabs, thereby enhancing the current-carrying capacity of the battery and reducing the temperature rise.

### BRIEF DESCRIPTION OF DRAWINGS

FIG. 1 is a schematic diagram of expanded structures of a first electrode plate and a second electrode plate of an electrode assembly according to a first embodiment;
FIG. 2 is a schematic diagram of a jelly-roll structure of an electrode assembly according to a first embodiment;
FIG. 3 is a schematic diagram of an exterior structure of an electrode assembly according to a first embodiment;
FIG. 4 is a schematic diagram of expanded structures of a first electrode plate and a second electrode plate according to a second embodiment;
FIG. 5 is a schematic diagram of a jelly-roll structure of an electrode assembly according to a second embodiment;
FIG. 6 is a schematic diagram of expanded structures of a first electrode plate and a second electrode plate according to a third embodiment;
FIG. 7 is a schematic diagram of a jelly-roll structure of an electrode assembly according to a third embodiment;
FIG. 8 is a schematic diagram of expanded structures of a first electrode plate and a second electrode plate according to a fourth embodiment;
FIG. 9 is a schematic diagram of a jelly-roll structure of an electrode assembly according to a fourth embodiment;
FIG. 10 is a schematic diagram of expanded structures of a first electrode plate and a second electrode plate according to a fifth embodiment;
FIG. 11 is a schematic diagram of a jelly-roll structure of an electrode assembly according to a fifth embodiment;
FIG. 12 is a schematic diagram of expanded structures of a first electrode plate and a second electrode plate according to a sixth embodiment;
FIG. 13 is a schematic diagram of a jelly-roll structure of an electrode assembly according to a sixth embodiment;
FIG. 14 is a schematic diagram of expanded structures of a first electrode plate and a second electrode plate according to a seventh embodiment;
FIG. 15 is a schematic diagram of a jelly-roll structure of an electrode assembly according to a seventh embodiment;
FIG. 16 is a schematic diagram of expanded structures of a first electrode plate and a second electrode plate according to an eighth embodiment;
FIG. 17 is a schematic diagram of a jelly-roll structure of an electrode assembly according to an eighth embodiment;
FIG. 18 is a schematic diagram of expanded structures of a second electrode plate according to a ninth embodiment;
FIG. 19 is a schematic diagram of an exterior structure of an electrode assembly according to a ninth embodiment;
FIG. 20 is a schematic diagram of expanded structures of a first electrode plate and a second electrode plate according to a tenth embodiment;
FIG. 21 is a schematic diagram of an exterior structure of an electrode assembly according to an eleventh embodiment; and
FIG. 22 is a schematic structural diagram of a battery according to a twelfth embodiment.

**Reference numerals:**

| | |
|---|---|
| Electrode assembly | 100 |
| First end | 101 |
| Second end | 102 |
| First electrode plate | 10 |
| First coating portion | 11 |
| First empty foil portion | 12 |
| First groove | 13 |
| Second electrode plate | 20 |
| Second coating portion | 21 |
| First end | 211 |
| Second end | 212 |
| Second empty foil portion | 22 |
| First empty foil region | 221 |
| Second empty foil region | 222 |
| Second groove | 23 |
| Cut portion | 24 |
| Third groove | 25 |
| Separator | 30 |
| First tab | 40 |
| Connecting portion | 41 |
| Protruding portion | 42 |
| Electrical connection portion | 43 |
| Second tab | 50 |
| Third tab | 60 |
| Fourth tab | 70 |
| First insulator | 80 |
| Second insulator | 90 |
| Third insulator | 91 |
| Battery | 200 |
| Housing | 201 |
| Electrode terminal | 202 |

### DETAILED DESCRIPTION OF EMBODIMENTS

The following clearly and fully describes the technical solutions in the embodiments of this application with reference to the drawings hereof. Apparently, the described embodiments are merely a part of but not all of the embodiments of this application. All other embodiments derived by a person of ordinary skill in the art based on the embodiments of this application without making any creative efforts shall fall within the protection scope of this application.

It needs to be noted that an element referred to as being "fixed to" another element may directly exist on the other element or may be fixed to the other element through an intermediate element. An element considered to be "connected to" another element may be directly connected to the other element or may be connected to the other element through an intermediate element. An element considered to be "disposed on" another element may be directly disposed on the other element or may be disposed on the other element through an intermediate element. The terms "vertical", "horizontal", "left", "right" and similar expressions used herein are merely for ease of description.

Unless otherwise defined, all technical and scientific terms used herein have the same meanings as usually understood by a person skilled in the technical field of this application. The terms used in the specification of this application herein are merely intended for describing specific embodiments but are not intended to limit this application. The term "and/or" used herein is intended to include any and all combinations of one or more related items preceding and following the term.

Embodiments of this application provide an electrode assembly, including a first electrode plate, a second electrode plate, and a separator. A polarity of the second electrode plate is opposite to a polarity of the first electrode plate, and the separator is disposed between the first electrode plate and the second electrode plate. The electrode assembly is formed by winding the first electrode plate, the separator, and the second electrode plate. The electrode assembly further includes a first tab, a second tab, and a third tab. The first tab is disposed on the first electrode plate. The second tab is disposed on the second electrode plate, and the third tab is disposed on the second electrode plate. In a thickness direction of the electrode assembly, projections of the first tab, the second tab, and the third tab do not overlap.

In the electrode assembly, the first tab, the second tab, and the third tab are disposed. Therefore, the electrode assembly exhibits a multi-tab structure, and shunts the current by using a plurality of parallel-connected tabs, thereby enhancing a current-carrying capacity of the battery and reducing a temperature rise.

The following describes some embodiments of this application in detail. To the extent that no conflict occurs, the following embodiments and the features in the embodiments may be combined with each other.

### First Embodiment

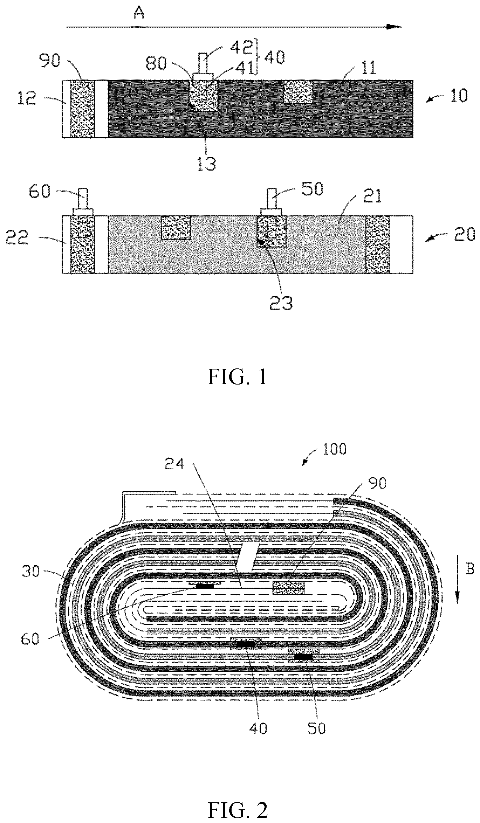

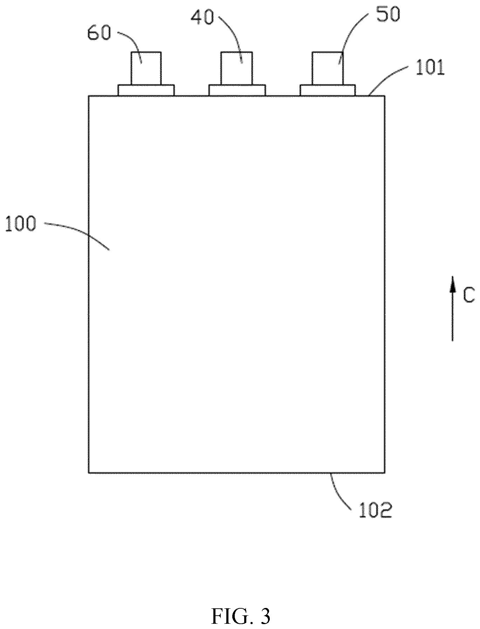

Referring to FIG. 1 and FIG. 2, in the first embodiment, an electrode assembly 100 includes a first electrode plate 10, a second electrode plate 20, and a separator 30. A polarity of the second electrode plate 20 is opposite to a polarity of the first electrode plate 10, and the separator 30 is disposed between the first electrode plate 10 and the second electrode plate 20. The electrode assembly 100 is formed by winding the first electrode plate 10, the separator 30, and the second electrode plate 20. The electrode assembly 100 further includes a first tab 40, a second tab 50, and a third tab 60. The first tab 40 is disposed on the first electrode plate 10. The second tab 50 and the third tab 60 are disposed on the second electrode plate 20. In a thickness direction of the electrode assembly 100, projections of the first tab 40, the second tab 50, and the third tab 60 on a projection plane perpendicular to the thickness direction of the electrode assembly 100 do not overlap. A direction indicated by an arrow B in FIG. 2 is the thickness direction of the electrode assembly 100. Further, referring to FIG. 3, a projection of the first tab 40 on the projection plane is located between a projection of the second tab 50 and a projection of the third tab 60. The three tabs may be configured as two positive tabs and one negative tab, or two negative tabs and one positive tab. The plurality of tabs are connected in parallel to shunt a current to reduce a temperature rise of the electrode assembly 100. According to an embodiment of this application, a material of the negative tab may be selected from copper, nickel, or nickel-plated copper.

The first electrode plate 10 includes a first coating portion 11 and a first empty foil portion 12. The second electrode plate 20 includes a second coating portion 21 and a second empty foil portion 22. The first coating portion 11 is formed by coating a surface of a first current collector with a first active layer. The second coating portion 21 is formed by coating a surface of a second current collector with a second active layer. The first current collector is a metal sheet configured to manufacture the first electrode plate 10, and the second current collector is a metal sheet configured to manufacture the second electrode plate 20. The first empty foil portion 12 is approximately a region not coated with the first active layer on the first current collector, and the second empty foil portion 22 is approximately a region not coated with the second active layer on the second current collector.

In the first embodiment, a first groove 13 is provided on the first active layer on the first coating portion 11. The first tab 40 is disposed in the first groove 13 to facilitate electrical connection between the first tab 40 and the first electrode plate 10. A direction indicated by an arrow A in FIG. 1 is a length direction of the electrode plate. In the length direction of the first electrode plate 10, a distance between the first groove 13 and an end of the first electrode plate 10 is 1/2-1/3 of a total length of the first electrode plate 10. The first tab 40 extends out of a lengthwise lateral edge of the first electrode plate 10. The first groove 13 is approximately rectangular, and is provided inwardly from the lengthwise lateral edge of the first electrode plate 10. In this way, on three sides of the first groove 13, the first groove contacts the first active layer on the first coating portion 11. Understandably, in other embodiments, the first groove 13 is provided in the middle of the first coating portion 11, and the first groove 13 contacts the first active layer all around. Alternatively, the first groove 13 runs through the first coating portion 11 along a direction of the arrow A or a direction perpendicular to the arrow A, and two opposite lateral edges of the first groove 13 contact the first active layer. This application is not limited thereto.

A second groove 23 is provided on the second coating portion 21. The second tab 50 is disposed in the second groove 23, and the second tab 50 extends out of a lengthwise lateral edge of the second electrode plate 20. At least two lateral edges of the second groove 23 contact the active layer on the second coating portion 21. Specifically, the second groove 23 is approximately rectangular, and is provided inwardly from the lengthwise lateral edge of the second electrode plate 20. In this way, on three sides of the second groove 23, the second groove contacts the second active layer on the second coating portion 21. Understandably, in other embodiments, the second groove 23 is provided in a middle region of the second coating portion 21, and the second groove 23 contacts the second active layer all around. Alternatively, the second groove 23 runs through the second coating portion 21 along a direction of the arrow A or a direction perpendicular to the arrow A, and two opposite lateral edges of the second groove 23 contact the second active layer. This application is not limited thereto.

Further, the third tab 60 is disposed in the second empty foil region 22. The third tab 60 and the second tab 50 extend out of an identical lengthwise lateral edge of the second electrode plate 20. In the first embodiment, the third tab 60 is located at winding initiation end of the second electrode plate 20. From a perspective of the thickness direction of the electrode assembly 100, the third tab 60 is approximately located on a central layer of the electrode assembly 100.

A direction indicated by an arrow C in FIG. 3 is a length direction of the electrode assembly 100. When the first electrode plate 10, the separator 30, and the second electrode plate 20 are wound into the electrode assembly 100, the first tab 40, the second tab 50, and the third tab 60 extend out of the first end 101 the electrode assembly 100 in the length direction. Understandably, in other embodiments, the first tab 40 extends out of the first end 101 of the electrode assembly 100, and the second tab 50 and the third tab 60 extend out of the second end 102 of the electrode assembly 100.

Further, the first tab 40 is approximately long-strip-shaped, and includes a connecting portion 41 and a protruding portion 42. The connecting portion 41 connects the first electrode plate 10, and the protruding portion 42 extends out of the electrode assembly 100. Specifically, the connecting portion 41 may be disposed in the first groove 13, and welded to the first current collector in the first groove 13. The protruding portion 42 extends out of the lengthwise lateral edge of the first electrode plate 10. In an optional embodiment, the first tab 40 and the first electrode plate 10 are integrally formed, and the first tab 40 is formed by extending outward from the lengthwise lateral edge of the first electrode plate 10.

The electrode assembly 100 further includes a first insulator 80. The first insulator 80 overlays the connecting portion 41 of the first tab 40. In a winding process, the first insulator 80 avoids a short circuit between the first tab 40 and the second electrode plate 20, and also prevents burrs on the connecting portion 41 from scratching or damaging the electrode plate. The electrode assembly 100 further includes a second insulator 90. A winding initiation end of the second electrode plate 20 includes a cut portion 24, and the second insulator 90 overlays the cut portion 24. In a process of manufacturing the second electrode plate 20, the cut portion 24 is formed by cutting the second current collector. The second insulator 90 can prevent the burrs on the cut portion 24 from damaging the electrode plate during the winding.

Further, a surface of the first tab 40 is plated with a metal material capable of being soldered and brazed, so as to enhance performance of the tab including a current-carrying capacity, and facilitate welding between the first tab 40 and an external circuit. In this embodiment of this application, the metal material capable of being soldered and brazed is preferably a nickel metal material, and a structure of the first tab 40 is preferably a nickel-plated copper structure.

### Second Embodiment

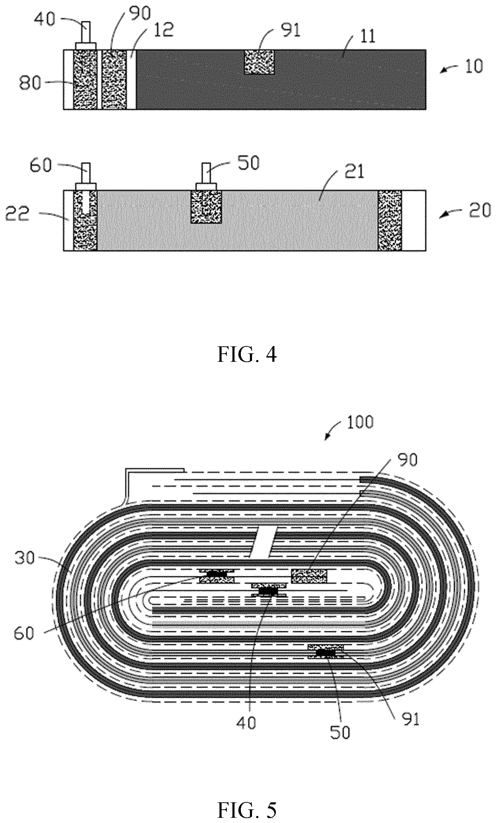

Referring to FIG. 4 and FIG. 5, an electrode assembly 100 in a second embodiment is almost identical to that in the first embodiment, but differs in: in the second embodiment, the first tab 40 is disposed on the first empty foil portion 12. The electrode assembly 100 further includes a third insulator 91. The third insulator 91 is disposed on the first coating portion 11. In the thickness direction of the electrode assembly 100, the third insulator 91 overlaps the second tab 50, thereby further preventing a short circuit between the second tab 50 and the first tab 10.

Further, in the thickness direction of the electrode assembly 100, the first tab 40 and the third tab 60 are interspaced with at least one layer of first electrode plate 10 or one layer of second electrode plate 20. A larger spacing between the tabs is conducive to improving manufacturability of the electrode assembly 100 and avoiding interference between a plurality of tabs during bending.

The first tab 40 is also located at the winding initiation end of the first electrode plate 10. From a perspective of the thickness direction of the electrode assembly 100, both the first tab 40 and the third tab 60 are approximately located on the winding initiation layer in the middle of the electrode assembly 100. The winding initiation end of the first electrode plate 10 is lower than the winding initiation end of the second electrode plate 20. Therefore, From a perspective of the thickness direction of the electrode assembly 100, the first tab 40 is slightly lower than the third tab 60. In a direction perpendicular to the thickness direction of the electrode assembly, the first tab 40 and the third tab 60 are interspaced, and the cut portion 24 and the second insulator 90 are located between the first tab 40 and the third tab 60.

Other structures of the electrode assembly 100 in the second embodiment are almost identical to those in the first embodiment, and are omitted herein.

### Third Embodiment

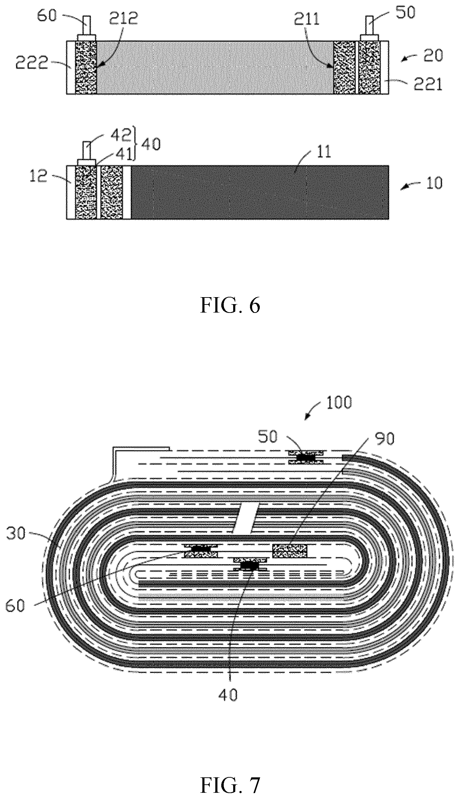

Referring to FIG. 6 and FIG. 7, an electrode assembly 100 in a third embodiment is approximately identical to that in the first embodiment, but differs in: in the third embodiment, the second empty foil portion 22 includes a first empty foil region 221 and a second empty foil region 222. The first empty foil region 221 is connected to a first end 211 of the second coating portion 21. The second empty foil region 222 is connected to a second end 212 of the second coating portion 21. The second tab 50 and the third tab 60 are disposed in the first empty foil region 221 and the second empty foil region 222 respectively.

Further, the first tab 40 is disposed on the first empty foil portion 12. The third tab 60 is located at a winding initiation end of the second electrode plate 20. The second tab 50 is located at a winding termination end of the second electrode plate 20. The first tab 40 is located at a winding initiation end of the first electrode plate 10. From a perspective of the thickness direction of the electrode assembly 100, the first tab 40 and the third tab 60 are approximately located in the middle of the electrode assembly 100 and are interspaced, and the second tab 50 is approximately located on an outermost layer of the electrode assembly 100, thereby achieving a reasonable layout of the plurality of tabs and simplifying manufacturing of the electrode assembly 100.

### Fourth Embodiment

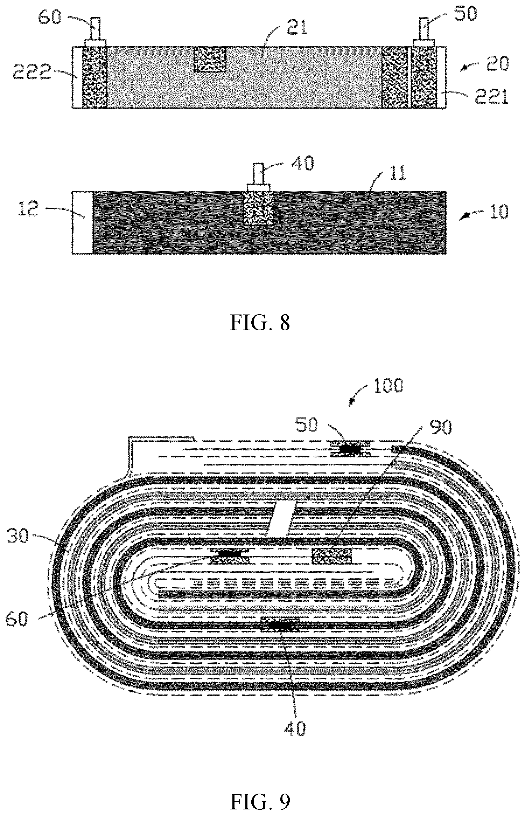

Referring to FIG. 8 and FIG. 9, an electrode assembly 100 in a fourth embodiment is almost identical to that in the third embodiment, but differs in: in the fourth embodiment, the first tab 40 is disposed on the first coating portion 11. A first groove 13 is provided on the first active layer on the first coating portion 11. The first tab 40 is disposed in the first groove 13. A direction indicated by an arrow A in FIG. 1 is a length direction of the electrode plate. In the length direction of the first electrode plate 10, a distance between the first groove 13 and an end of the first electrode plate 10 is 1/2-1/3 of a total length of the first electrode plate 10. The first tab 40 extends out of a lengthwise lateral edge of the first electrode plate 10.

From a perspective of the thickness direction of the electrode assembly 100, the first tab 40 and the third tab 60 are interspaced with at least one layer of first electrode plate 10 or one layer of second electrode plate 20.

### Fifth Embodiment

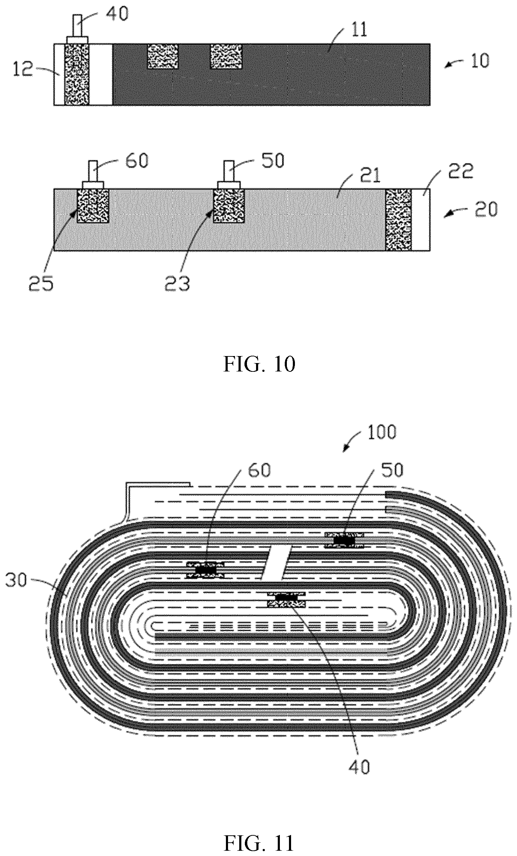

Referring to FIG. 10 and FIG. 11, an electrode assembly 100 in a fifth embodiment is almost identical to that in the second embodiment, but differs in: in the fifth embodiment, a third groove 25 is provided on the second coating portion 21, and the third tab 60 is disposed in the third groove 25.

In the fifth embodiment, the third groove 25 is approximately rectangular, and is provided inwardly from the lengthwise lateral edge of the second coating portion 21. In this way, on three sides of the third groove 25, the third groove contacts the second active layer on the second coating portion 21. Understandably, in other embodiments, the third groove 25 is provided in a middle region of the second coating portion 21, and the third groove 25 contacts the second active layer all around. Alternatively, the third groove 25 runs through the second coating portion 21 along a length direction of the electrode plate or a direction perpendicular to the length direction of the electrode plate, and two opposite lateral edges of the third groove 25 contact the second active layer.

### Sixth Embodiment

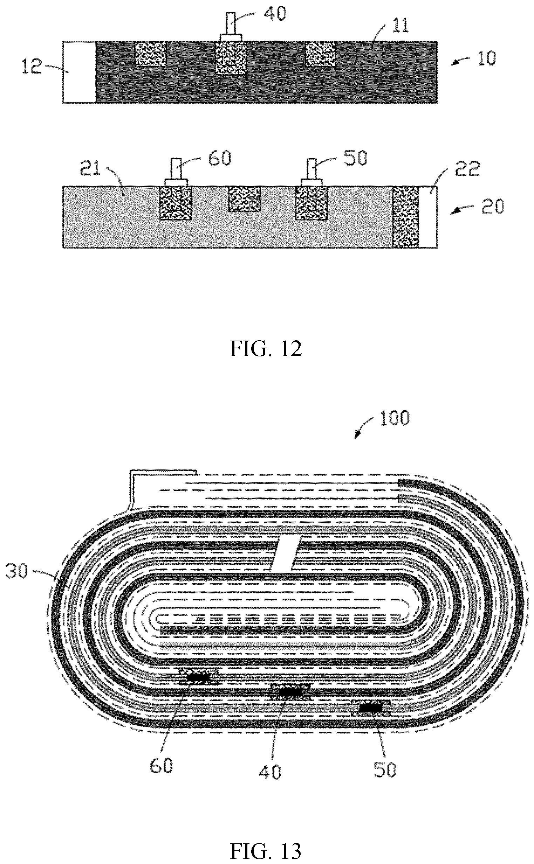

Referring to FIG. 12 and FIG. 13, an electrode assembly 100 in a sixth embodiment is almost identical to that in the fifth embodiment, but differs in: in the sixth embodiment, the first tab 40 is disposed on the first coating portion 11. A first groove 13 is provided on the first active layer on the first coating portion 11. The first tab 40 is disposed in the first groove 13.

Other structures of the electrode assembly 100 in the sixth embodiment are almost identical to those in the fifth embodiment, and are omitted herein.

### Seventh Embodiment

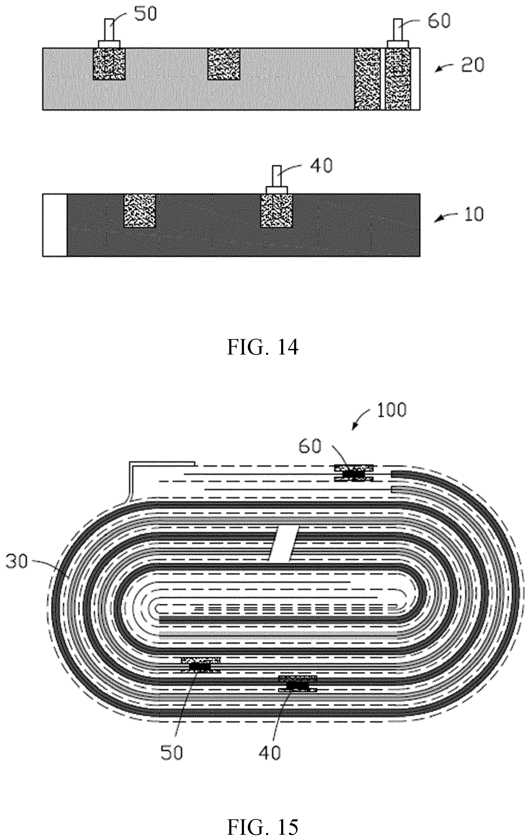

Referring to FIG. 14 and FIG. 15, an electrode assembly 100 in a seventh embodiment is almost identical to that in the first embodiment, but differs in: in the seventh embodiment, the third tab 60 is located at a winding termination end of the second electrode plate 20, and correspondingly, the second empty foil portion 22 is located at a winding termination end of the second electrode plate 20. From a perspective of the thickness direction of the electrode assembly 100, the third tab 60 is approximately located on an outermost layer of the electrode assembly 100, thereby facilitating differentiation between the third tab 60 and the first tab 40 or the second tab 50, and reducing a probability of incorrect connection between the electrode assembly 100 and an external circuit.

### Eighth Embodiment

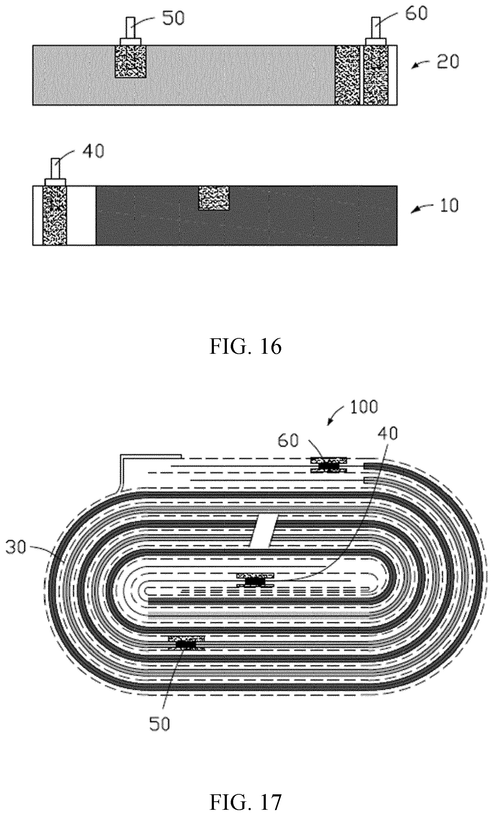

Referring to FIG. 16 and FIG. 17, an electrode assembly 100 in an eighth embodiment is almost identical to that in the second embodiment, but differs in: in the eighth embodiment, the third tab is located at a winding termination end of the second electrode plate 20, and the first tab 40 is also located at the winding initiation end of the first electrode plate 10. From a perspective of the thickness direction of the electrode assembly 100, the first tab 40 is approximately located on a central layer of the electrode assembly 100, and the third tab 60 is approximately located on an outermost layer of the electrode assembly 100, thereby increasing a spacing between the tabs and improving manufacturability of the electrode assembly 100.

### Ninth Embodiment

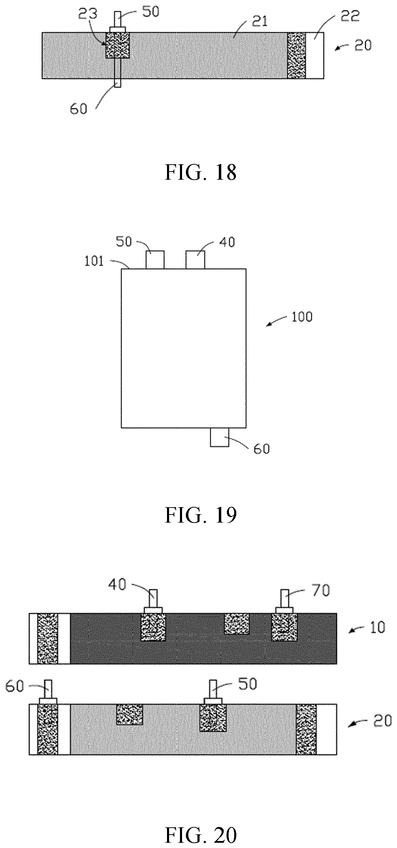

Referring to FIG. 18, an electrode assembly 100 in the ninth embodiment is almost identical to that in the first embodiment, but differs in: in the ninth embodiment, the second tab 50 and the third tab 60 are integrally formed, and, in a direction perpendicular to the length direction of the electrode plate, the integrally formed second tab 50 and third tab 60 run through the second electrode plate 20. In other words, the second tab 50 and the third tab 60 extend out of two opposite lengthwise lateral edges of the second electrode plate 20 respectively. Further, referring to FIG. 19, in the length direction of the electrode assembly 100, the second tab 50 extends out of the first end 101 of the electrode assembly 100, and the third tab 60 extends out of the second end 102 of the electrode assembly.

Understandably, in other embodiments, the second tab 50 and the third tab 60 may also be mutually independent structures disposed in different positions on the second electrode plate 20 respectively. In addition, the second tab 50 extends out of the first end 101 of the electrode assembly 100, and the third tab 60 extends out of the second end 102 of the electrode assembly 100. Meanwhile, the first tab 40 may extend out of the first end 101 or the second end 102 of the electrode assembly 100.

### Tenth Embodiment

Referring to FIG. 20, an electrode assembly 100 in a tenth embodiment is almost identical to that in the first embodiment, but differs in: in the tenth embodiment, the electrode assembly 100 further includes a fourth tab 70. The fourth tab 70 is disposed on the first electrode plate 10 or the second electrode plate 20. In a thickness direction of the electrode assembly 100, a projection of the fourth tab 70 on the projection plane does not overlap the projections of the first tab 40, the second tab 50, and the third tab 60. The first tab 40 may extend out of the first end 101 or the second end 102 of the electrode assembly 100 in the length direction, but this application is not limited thereto.

### Eleventh Embodiment

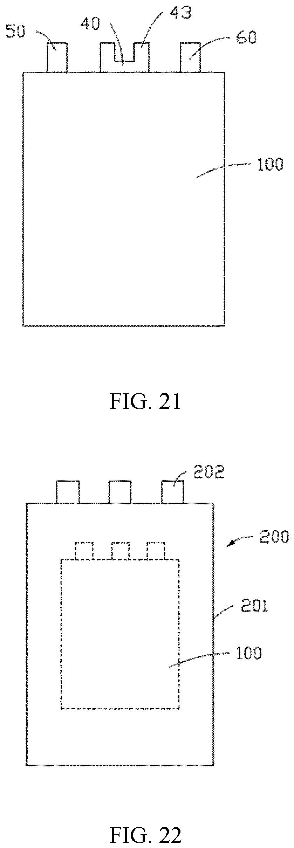

Referring to FIG. 21, an electrode assembly 100 in an eleventh embodiment is almost identical to that in the first embodiment, but differs in: at least two electrical connection portions 43 are disposed at an end at which the first tab 40 extends out of the electrode assembly 100. The at least two electrical connection portions 43 are interspaced and configured to connect an external circuit. In this way, the first tab 40 is divided into two tabs of identical polarity, thereby further shunting the current and increasing the current-carrying capacity of the electrode assembly 100. In other words, the two electrical connection portions 43 are disposed at an end of the protruding portion 42, the end being away from the connecting portion 41.

The electrical connection portions 43 may be formed by welding a tab adapter onto the first tab 40, or may be formed by cutting the first tab 40. Understandably, in other embodiments, a quantity of the electrical connection portions 43 may be more than two, and this application is not limited thereto. By analogy, a plurality of electrical connection portions may also be disposed on the second tab 50 and the third tab 60.

### Twelfth Embodiment

Referring to FIG. 22, a twelfth embodiment provides a battery 200, including a housing 201 and the electrode assembly 100 disclosed in any of the foregoing embodiments. The housing 201 accommodates the electrode assembly 100. Further, the battery 200 includes a plurality of electrode terminals 202 disposed on an outer surface of the housing 201, and each electrode terminal 202 is electrically connected to the first tab 40, the second tab 50, and the third tab 60 separately.

The foregoing embodiments are merely intended for describing the technical solutions of this application but not intended as a limitation. Although this application is described in detail with reference to the foregoing optional embodiments, a person of ordinary skill in the art understands that modifications or equivalent substitutions may be made to the technical solutions of this application without departing from the spirit and scope of the technical solutions of this application.

## Claims

1. An electrode assembly, comprising:
a first electrode plate;
a second electrode plate, wherein a polarity of the second electrode plate is opposite to a polarity of the first electrode plate; and
a separator, disposed between the first electrode plate and the second electrode plate, wherein
the electrode assembly is formed by winding the first electrode plate, the separator, and the second electrode plate, **characterized in that** the electrode assembly further comprises:
a first tab, disposed on the first electrode plate;
a second tab, disposed on the second electrode plate; and
a third tab, disposed on the second electrode plate, wherein
in a thickness direction of the electrode assembly, projections of the first tab, the second tab, and the third tab on a projection plane perpendicular to the thickness direction of the electrode assembly do not overlap.

2. The electrode assembly according to claim 1, wherein a projection of the first tab on the projection plane is located between a projection of the second tab and a projection of the third tab.

3. The electrode assembly according to claim 1, wherein the first electrode plate comprises a first coating portion and a first empty foil portion, and the second electrode plate comprises a second coating portion and a second empty foil portion, wherein the first coating portion is formed by coating a surface of a first current collector with a first active layer, and the second coating portion is formed by coating a surface of a second current collector with a second active layer.

4. The electrode assembly according to claim 3, wherein a first groove is provided on the active layer on the first coating portion, and the first tab is disposed in the first groove.

5. The electrode assembly according to claim 4, wherein, in a length direction of the first electrode plate, a distance between the first groove and an end of the first electrode plate is 1/2-1/3 of a total length of the first electrode plate.

6. The electrode assembly according to claim 3, wherein the first tab is disposed on the first empty foil portion.

7. The electrode assembly according to any one of claims 3 to 6, wherein a second groove is provided on the second coating portion, the second tab is disposed in the second groove, and at least two lateral edges of the second groove contact the active layer on the second coating portion.

8. The electrode assembly according to claim 7, wherein the third tab is disposed on the second empty foil portion.

9. The electrode assembly according to claim 7, wherein a third groove is provided on the second coating portion, and the third tab is disposed in the third groove.

10. The electrode assembly according to any one of claims 3 to 6, wherein the second empty foil portion comprises a first empty foil region and a second empty foil region, the first empty foil region is connected to a first end of the second coating portion, the second empty foil region is connected to a second end of the second coating portion, and the second tab and the third tab are disposed in the first empty foil region and the second empty foil region respectively.

11. The electrode assembly according to claim 1, wherein, in the thickness direction of the electrode assembly, the first tab and the third tab are interspaced with at least one layer of first electrode plate or one layer of second electrode plate.

12. The electrode assembly according to claim 1, wherein the first tab comprises a connecting portion and a protruding portion, the connecting portion connects the first electrode plate, and the protruding portion extends out of the electrode assembly.

13. The electrode assembly according to claim 12, wherein the electrode assembly further comprises a first insulator, and the first insulator overlays the connecting portion.

14. The electrode assembly according to claim 11, wherein the electrode assembly further comprises a second insulator, a winding initiation end of the second electrode plate comprises a cut portion, and the second insulator overlays the cut portion.

15. The electrode assembly according to claim 1, wherein the first tab extends out of a first end of the electrode assembly, and the second tab and the third tab extend out of a second end of the electrode assembly.

16. The electrode assembly according to claim 1, wherein the second tab and the third tab are integrally formed, the second tab extends out of a first end of the electrode assembly, and the third tab extends out of a second end of the electrode assembly.

17. The electrode assembly according to claim 1, wherein the electrode assembly further comprises a fourth tab, the fourth tab is disposed on the first electrode plate or the second electrode plate, and, in the thickness direction of the electrode assembly, a projection of the fourth tab on the projection plane does not overlap the projections of the first tab, the second tab, and the third tab.

18. The electrode assembly according to claim 1, wherein at least two electrical connection portions are disposed at an end at which the first tab extends out of the electrode assembly, and the at least two electrical connection portions are interspaced and configured to connect an external circuit.

19. The electrode assembly according to claim 1, wherein a surface of the first tab or a surface of the third tab is plated with a metal material capable of being soldered and/or brazed.

20. A battery, comprising a housing and an electrode assembly, wherein the electrode assembly is the electrode assembly according to any one of claims 1 to 19, and the housing accommodates the electrode assembly.

21. The battery according to claim 20, wherein the battery comprises a plurality of electrode terminals disposed on an outer surface of the housing, and each electrode terminal is electrically connected to the first tab, the second tab, and the third tab separately.
